# FASCICULE DE BREVET EUROPEEN

(11) **EP 0 560 677 B1**
(45) Date de publication et mention de la délivrance du brevet: **04.08.1999**
(21) Numéro de dépôt: 93400613.1
(22) Date de dépôt: 10.03.1993
(51) Int. Cl.: B32B 17/10, H05B 3/86, H01Q 1/12, C03C 27/12

(54) **Vitrage en verre feuilleté chauffable équipé de fils de résistance agencés dans la couche thermoplastique intermédiaire**
Heizbare Verbundglasscheibe, ausgerüstet mit in der thermoplastischen Zwischenschicht eingebetteten Widerstandsdrähten
Heatable laminates glass, containing resistance-wires in the thermoplastic interlayer

(30) Priorité: 11.03.1992 DE 4207638
(43) Date de publication de la demande: 15.09.1993
(73) Titulaire: SAINT-GOBAIN VITRAGE, 92400 Courbevoie (FR); SEKURIT SAINT GOBAIN Deutschland GmbH & Co. KG, 52066 Aachen (DE)
(72) Inventeur: Eulenberg, Thomas, W-5100 Aachen (DE); Kunert, Heinz, Dr., W-5000 Köln 41 (DE); Gillner, Manfred, W-5100 Aachen (DE); Sauer, Gerd, W-5190 Stolberg (DE)
(74) Mandataire: Muller, René

(56) Documents cités:
- EP-A- 0 297 328
- EP-A- 0 382 895
- DE-A- 3 910 031
- DE-B- 2 350 427
- FR-A- 2 592 544
- LU-A- 66 174
- US-A- 3 971 029

## Description

La présente invention concerne un vitrage en verre feuilleté chauffable électriquement équipé de fils de résistance minces agencés à faible distance les uns des autres dans la couche thermoplastique intermédiaire.

Les vitrages en verre feuilletés chauffables électriquement de ce type sont connus dans diverses formes de réalisation et sont utilisés en particulier dans les véhicules automobiles, par exemple comme pare-brise chauffable ou comme lunette arrière chauffable. Les fils de résistance métalliques insérés dans la couche thermoplastique intermédiaire sont en règle générale très minces et ont un diamètre de 0,005 à 0,1 mm de manière à ne pas gêner la vision à travers le vitrage. Ils sont déposés sous forme rectiligne ou ondulée et ce, habituellement à des distances mutuelles d'environ 3 à 10 mm.

Habituellement, les fils de résistance électriques sont répartis uniformément sur toute la surface du vitrage ou dans une zone du vitrage destinée à la vision, de telle sorte que la surface correspondante du vitrage se réchauffe uniformément lorsqu'on l'alimente en courant de chauffage et que la couche d'humidité présente sur le vitrage soit de la sorte éliminée uniformément.

Mais on peut également, comme on le sait, agencer les fils de résistance électriques par groupes dans le vitrage en verre feuilleté de telle sorte que, respectivement, des réseaux ou des groupes de fils présentant une série de fils s'étendant parallèlement les uns aux autres soient agencés à distance de, par exemple, quelques centimètres. Lorsque ces groupes de fils sont agencés dans la direction horizontale, on obtient un agencement de fils qui ressemble un peu à la portée d'un cahier de musique. Un tel agencement des fils de résistance a pour effet que le dégivrage destiné à faire disparaître une couche d'humidité s'amorce par bandes. Contrairement à un vitrage chauffé de manière tout à fait uniforme, on peut constater nettement qu'il s'agit d'un verre chauffable électriquement bien que les fils de résistance proprement dits en tant que tels ne puissent être distingués ou alors uniquement lors d'un examen de très près.

On a constaté, dans le cas d'un tel agencement en groupes des fils de résistance, que les images optiques diffractées, qui se forment du fait de la présence des fils de résistance lorsqu'on regarde à travers le vitrage en direction de sources de lumière ponctuelles, en particulier les phares de véhicules venant en sens inverse ou suivant, étaient particulièrement visibles. Certes, les images diffractées en forme de X qui se forment respectivement autour des sources de lumière ponctuelles ne sont pas aussi marquées que dans le cas des vitrages chauffants connus où les fils de résistance sont répartis de manière uniforme, mais elles agissent sur l'oeil humain de manière subjective et le perturbent manifestement d'autant plus que les zones du vitrage comprises entre les groupes de fils sont exemptes de ces phénomènes de diffraction et que l'oeil humain a tout particulièrement l'attention attirée par l'alternance répétée de zones optiquement irréprochables et de zones provoquant des phénomènes de diffraction.

On peut par ailleurs, d'une manière connue, éviter les phénomènes de diffraction cités en noyant les fils de résistance, selon un agencement le plus irrégulier possible, dans la couche thermoplastique intermédiaire (document DE-OS 20 13 112). Un agencement irrégulier des fils de résistance peut être réalisé, par exemple selon les documents DE-PS 23 50 427 et DE-PS 23 65 831, en fixant les fils de résistance sous tension mécanique ou déformation élastique sur la couche thermoplastique intermédiaire et en soumettant ensuite la couche thermoplastique intermédiaire à un traitement de contraction. En pratique, ces procédés sont cependant difficiles à réaliser.

L'invention a pour but de réaliser un vitrage en verre feuilleté chauffable électriquement du type mentionné dans le préambule avec un agencement en groupes des fils de résistance, ce vitrage étant tel que les phénomènes de diffraction se produisant dans le cas de sources de lumière ponctuelles se fassent moins remarquer et n'exercent aucun effet particulièrement gênant sur l'oeil humain.

Ce but est atteint selon l'invention de la manière suivante : la surface chauffée du vitrage en verre feuilleté est garnie dans l'ensemble uniformément par les fils de résistance, plusieurs fils de résistance voisins les uns des autres sont rassemblés respectivement en un groupe de fils et sont connectés aux lignes d'alimentation en courant et, entre ces groupes de fils connectés aux lignes d'alimentation en courant, des groupes de fils constitués de plusieurs fils de résistance voisins les uns des autres sont respectivement séparés d'au moins une ligne d'alimentation en courant de chauffage.

L'invention tire profit du fait connu que, pour l'oeil humain, l'action alternée de bandes accusant des phénomènes de diffraction et de bandes exemptes de phénomènes de diffraction est particulièrement gênante et crée consciemment, dans les zones en forme de bandes qui se trouvent entre les groupes de fils servant au chauffage, des conditions qui, du point de vue des phénomènes de diffraction, sont identiques à celles qui règnent dans les zones des groupes de fils. De cette manière, d'une part, l'effet de dégivrage par bandes reste entièrement maintenu, tandis que, d'autre part, des conditions optiquement identiques du point de vue des phénomènes de diffraction se produisent dans toute la zone susceptible d'être chauffée.

Dans un autre développement de l'invention, les fils métalliques qui ne sont pas connectés à la ligne d'alimentation en courant de chauffage sont pourvus en totalité ou en partie d'une ligne d'alimentation électriquement séparée des conducteurs de chauffage de telle sorte qu'ils remplissent également une fonction électrique. Il est ainsi possible par exemple de connecter occasionnellement les fils de résistance en question comme conducteurs de chauffage supplémentaires en cas de besoin. Dans ce cas, ces fils de résistance ne sont séparés électriquement que de l'une des deux lignes collectrices et sont équipés d'une ligne d'alimentation en courant propre qui est isolée vis-à-vis de la ligne collectrice électriquement séparée et peut être connectée à la source de courant par un interrupteur approprié. Par ailleurs, les fils de résistance séparés en question, peuvent être utilisés comme fils d'antenne. Dans ce cas, on recommande de séparer les fils de résistance des deux lignes collectrices ou de les isoler électriquement vis-à-vis de celles-ci.

Diverses formes de réalisation et divers développements du vitrage en verre feuilleté selon l'invention seront décrits ci-dessous plus en détail avec référence aux dessins annexés dans lesquels :
La Fig. 1 est une vue schématique d'un vitrage en verre feuilleté chauffable électriquement selon l'invention;
la Fig. 2 est une vue fragmentaire de la Fig. 1 montrant des fils de résistance rectilignes;
la Fig. 3 est une vue fragmentaire de la Fig. 1 montrant des fils de résistance déposés en sinusoïdes;
la Fig. 4 est une vue partielle avec des fils métalliques séparés par sectionnement par groupes;
la Fig. 5 est une vue en coupe le long d'une ligne collectrice;
la Fig. 6 est une vue en coupe le long d'une ligne collectrice avec une mise en contact distincte des fils de résistance séparés;
la Fig. 7 représente schématiquement un vitrage chauffant selon l'invention avec fonction simultanée d'antenne;
La fig. 8 représente un vitrage chauffant selon l'invention, avec trois canaux d'antenne, et
La fig. 9 représente un vitrage chauffant selon l'invention avec une zone d'antenne FM de grande surface et une zone d'antenne AM de petite surface.

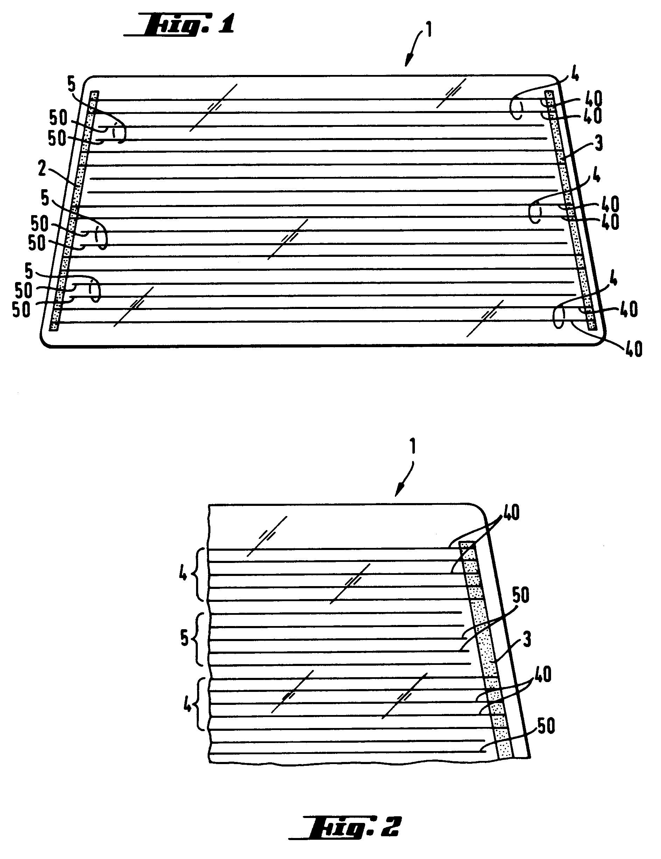

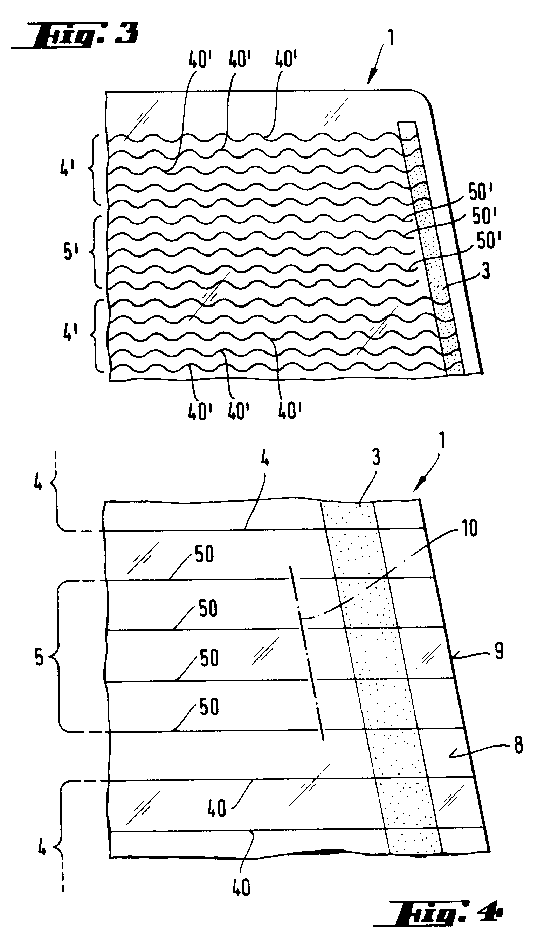

La vue schématique de la Fig. 1 montre un vitrage en verre feuilleté propre à être utilisé comme lunette arrière chauffable électriquement et sur la couche thermoplastique intermédiaire duquel sont agencées deux lignes collectrices 2, 3 ayant la forme, par exemple, de feuilles de cuivre étamées s'étendant le long des deux bords latéraux et, entre ces lignes collectrices 2, 3, des groupes 4, 5 de fils de résistance s'étendant dans la direction horizontale, les fils de résistance étant agencés les uns par rapport aux autres de manière essentiellement parallèle. Les groupes de fils 4, 5 sont représentés schématiquement comme comprenant chacun deux conducteurs individuels 40, 50, mais il s'agit en réalité de groupes de plusieurs fils de résistance voisins les uns des autres, par exemple, des groupes de chacun trois à dix fils individuels.

Tandis que les groupes de fils de résistance 4 sont en contact conducteur de l'électricité à la fois avec la ligne collectrice 2 et la ligne collectrice 3, les groupes de fils de résistance 5 n'ont pas de contact électrique au moins avec l'une des deux lignes collectrices 2 ou 3. Dans les dessins, ces groupes se terminent à courte distance de la ligne collectrice 2 ou 3.

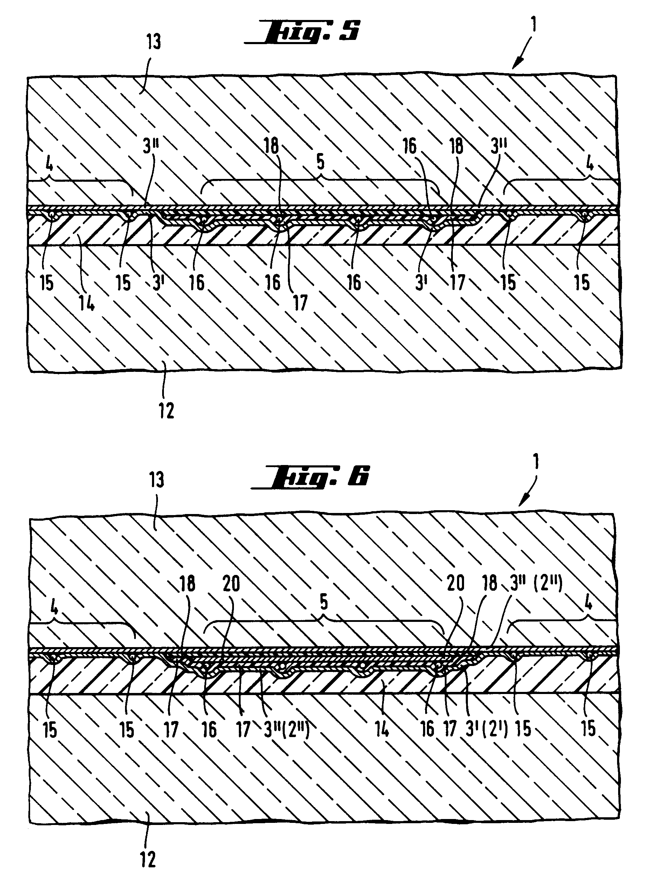

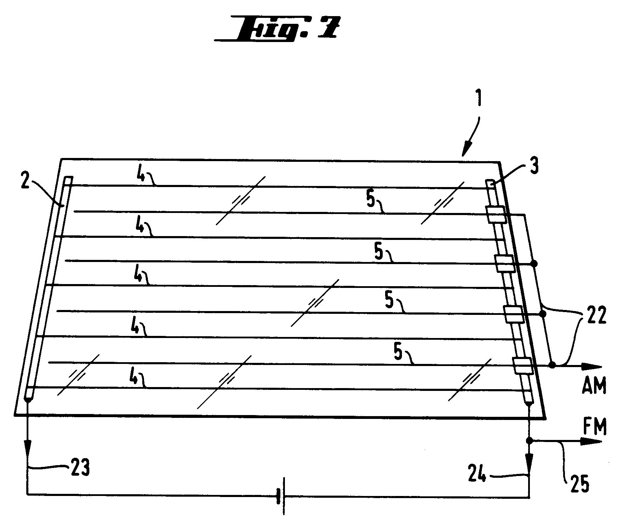

L'agencement par groupes des fils de résistance 40, 50 peut être observé sur les Fig. 2 et 3. Comme le montre la Fig. 2, les groupes de fils 4 et 5 sont respectivement constitués de cinq fils individuels 40 posés en ligne droite. Les fils individuels 40 sont par exemple des fils de tungstène d'un calibre de 0,01 mm. Ils sont fixés sur la couche thermoplastique intermédiaire selon des méthodes connues avant la juxtaposition et l'union des couches individuelles du vitrage en verre feuilleté, tout comme les lignes collectrices 2 et 3. L'écart mutuel des fils individuels 40, 50 est de 2 à 8 mm. Tous les fils individuels 50 du groupe de fils 5 se terminent avant la ligne collectrice 3 de sorte qu'aucun contact électrique n'est établi entre les fils du groupe de fils 5 et la ligne collectrice 3.

La forme de réalisation de vitrage chauffant représentée sur la Fig. 3 a en principe la même structure, c'est-à-dire des groupes de fils 4' constitués de plusieurs fils individuels 40' qui sont en contact avec la ligne collectrice 3, tandis que les fils individuels 50' des groupes de fils 5' disposés entre les groupes de fils 4' n'ont aucun contact électrique avec la ligne collectrice 3. Dans ce cas cependant, les fils individuels sont posés en sinusoïde, par exemple, à l'aide de dispositifs tels que ceux qui sont décrits dans les documents DE 16 79 930 et DE 41 01 984. Les fils de résistance posés sur la couche thermoplastique intermédiaire sont de minces fils de tungstène d'un calibre d'environ 0,01 mm, espacé de distances mutuelles de 3 à 6 mm.

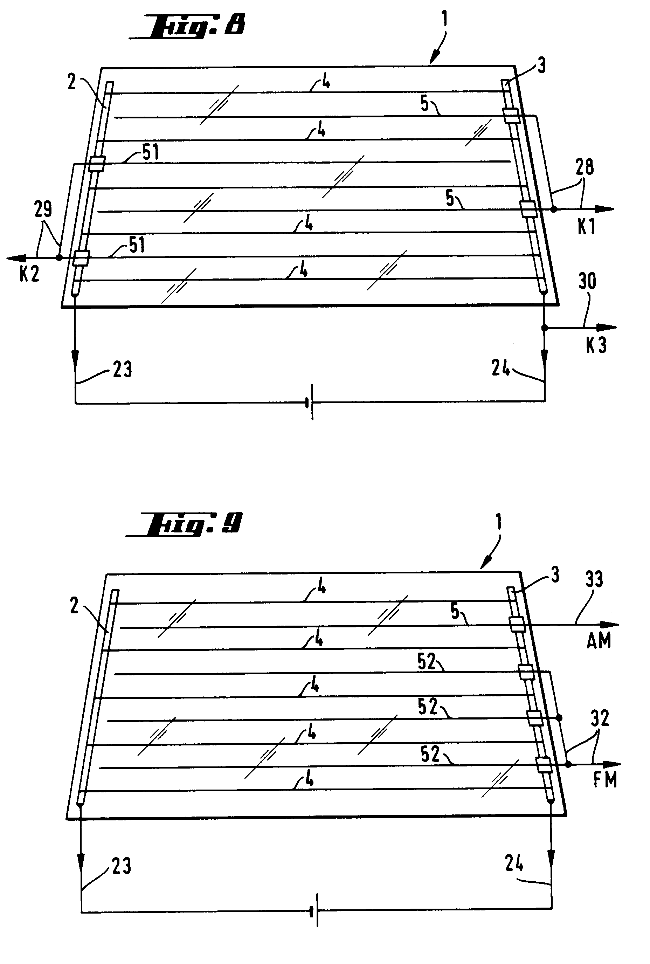

La réalisation pratique de la mesure visant à supprimer le contact électrique avec l'une et/ou l'autre des lignes collectrices dans le cas des groupes de fils individuels peut s'effectuer de diverses manières. Une première forme de réalisation à cet effet est représentée sur la Fig. 4. Tous les fils individuels 40, 50 des groupes de fils 4 et 5 sont amenés sur la pellicule thermoplastique 8, qui sera par la suite collée à deux feuilles de verre individuelles pour former le vitrage en verre feuilleté, par dessus la ligne collectrice 3 jusqu'au bord 9 et sont alors fixés sur la pellicule 8 et ce, de manière traditionnelle. Le cas échéant, les fils individuels 40, 50 sont coupés le long du bord 9 de la feuille 8. Lorsque toute la pellicule aura été garnie de cette manière des fils de résistance, les fils individuels 50 formant les groupes de fils 5 seront sectionnés le long de la ligne 10 à courte distance de la ligne collectrice 3. Le cas échéant, le même sectionnement des fils individuels 50 des groupes de fils 5 sera également réalisé à courte distance devant l'autre ligne collectrice.

Une autre possibilité de réalisation de l'invention consiste à empêcher le contact des groupée de fils 5 avec les lignes collectrices en intercalant, dans les zones correspondantes entre la ligne collectrice et les fils de résistance, une pellicule isolante électrique. Sur la Fig. 5 est représenté un agencement correspondant, sous la forme d'une coupe longitudinale à travers un vitrage en verre feuilleté fini dans la zone d'une ligne collectrice. On peut y observer les deux feuilles de verre individuelles 12 et 13, qui sont reliées l'une à l'autre via la couche thermoplastique intermédiaire 14. Les lignes collectrices 3 sont constituées d'une bande mince inférieure 3' et d'une bande mince supérieure 3'' entre lesquelles les fils de résistance 15 correspondant aux groupes de fils 4 sont noyés. Pour empêcher tout contact électrique avec les bandes minces 3' dans le cas des fils de résistance 16 appartenant aux groupes de fils 5, une section 17 d'une pellicule isolante électrique est intercalée entre la bande mince inférieure 3' et les fils 16. De même, une section 18 d'une pellicule isolante électrique est intercalée entre les fils 16 du groupe de fils 5 et la bande mince de cuivre supérieure 3''.

Au cas où les fils 16 des groupes de fils 5 devraient remplir une fonction électrique, par exemple, comme fils d'antenne, et devraient également être mis en contact à cette fin, on procédera de la manière représentée sur la Fig. 6. Entre la bande mince de cuivre inférieure 3' et les fils 16 des groupes de fils 5 est à nouveau intercalée une section 17 d'une pellicule isolante électrique. Sur les fils 16 des groupes de fils 5 se trouve une section de feuille de métal mince 20 qui est en contact électrique avec les fils 16. Cette section de feuille de métal 20 est dotée d'une barrette de connexion non représentée, qui ressort latéralement du vitrage en verre feuilleté et sert à la connexion électrique de ces groupes de fils. Au-dessus de cette feuille de métal mince 20 est à nouveau agencée une section 18 d'une pellicule isolante électrique, qui assure l'isolation électrique vis-à-vis de la bande mince supérieure 3''.

Les groupes de fils 5 contactés séparément peuvent servir en particulier d'éléments d'antenne. Dans les Fig. 7 à 9 sont reproduits divers exemples de la manière dont les ensembles de fils individuels peuvent être utilisés comme éléments d'antenne.

Dans la forme de réalisation représentée sur la Fig. 7, quatre groupes de fils 5, qui ne sont représentés ici que par une ligne, sont isolés électriquement vis-à-vis des lignes collectrices 2 et 3, vis-à-vis de la ligne collectrice 3 si l'on se réfère à la Fig. 6. Les barrettes de connexion aux groupes de fils 5 ressortent latéralement du vitrage en verre feuilleté et sont connectées à une ligne de connexion commune 22. Le signal électrique prélevé sur le fil d'antenne 22 peut servir de signal d'antenne radio pour les domaines AM et FM. Cependant, il est également possible de séparer la fonction d'antenne des fils et d'utiliser pour le domaine FM le signal d'antenne présent sur la ligne de connexion 22, tandis que le signal d'antenne pour le domaine FM peut être obtenu de la zone de fils de chauffage, qui est reliée à la batterie via les lignes d'alimentation en courant 23, 24 et peut être connectée à 'entrée d'antenne FM de la radio via une ligne de connexion 25. De même, les groupes de fils de résistance ne sont à nouveau représentés ici respectivement que par une ligne.

Une autre possibilité d'application des zones de fils du verre feuilleté est représentée sur la Fig. 8. Dans ce cas, deux groupes de fils 5 sont interconnectés et mis en contact avec une ligne de connexion 28 tandis que deux autres groupes de fils 51 sont également interconnectés et mis en contact avec une ligne de connexion 29. En outre, la ligne d'alimentation en courant 24 de la zone de fils de chauffage est à nouveau équipée d'une ligne de connexion 30 par laquelle la tension d'antenne est obtenue de la zone de fils de chauffage. Les trois lignes de connexion 28, 29 et 30 forment un système de réception en diversité à trois antennes dans lequel la zone de fils mise en contact par la ligne de connexion 28 forme le canal d'antenne K1, la zone de fils connectée par la ligne de connexion 29, le canal d'antenne K2, et la zone de fils de chauffage en contact avec la ligne de connexion 30, le canal d'antenne K3. Pour produire une plus forte différenciation des caractéristiques d'antenne, les connections des zones de fils individuelles peuvent être situées sur des côtés différents.

La Fig. 9 représente une forme de réalisation présentant un champ d'antenne FM de grande surface, qui est formé par trois groupes de fils 52. Ces trois groupes de fils 52 sont reliés les uns aux autres et la ligne de connexion 32 qui est mise en contact avec cette zone de fils est prévue pour une liaison à l'entrée d'antenne FM de la radio. En outre, cette forme de réalisation présente une petite zone d'antenne de faible capacité dans la région supérieure du vitrage en verre feuilleté. Cette petite zone d'antenne est formée par le groupe de fils 5 et est équipée d'une ligne de connexion 33 qui est prévue pour une liaison à l'entrée d'antenne AM de la radio. La zone de fils de chauffage, qui est connectée à la batterie via les lignes d'alimentation en courant 23 et 24, n'a dans ce cas aucune fonction d'antenne.

## Revendications

1. Vitrage en verre feuilleté chauffable électriquement comportant des fils de résistance de diamètre compris entre 0,005 et 0,1 mm et espacés les uns des autres de 2 à 8 mm, lesdits fils étant insérés dans la couche thermoplastique intermédiaire de manière essentiellement parallèle les uns par rapport aux autres et s'étendant entre deux lignes collectrices (2 ; 3) agencées dans la couche thermoplastique intermédiaire, **caractérisé en ce que** la surface chauffée du vitrage en verre feuilleté (1) est garnie dans l'ensemble uniformément par les fils de résistance, plusieurs fils de résistance voisins les uns des autres sont rassemblés respectivement en un groupe de fils (4) et sont connectés aux lignes d'alimentation en courant (lignes collectrices 2, 3) et, entre ces groupes de fils (4) connectés aux lignes d'alimentation en courant, des groupes de fils (5) constitués de plusieurs fils de résistance voisins les uns des autres sont respectivement séparés d'au moins une ligne d'alimentation en courant de chauffage.

2. Vitrage en verre feuilleté chauffable électriquement selon la revendication 1, **caractérisé en ce que** les groupes de fils (4, 5) sont constitués de fils de résistance insérés en ligne droite dans la couche thermoplastique intermédiaire.

3. Vitrage en verre feuilleté chauffable électriquement selon la revendication 1, **caractérisé en ce que** les groupes de fils (4', 5') sont constitués de fils de résistance insérés en sinusoïde dans la couche thermoplastique intermédiaire.

4. Procédé de réalisation d'un vitrage en verre feuilleté chauffable électriquement selon la revendication 2 ou 3, **caractérisé en ce que** les fils de résistance de tous les groupes de fils (4, 5) sont amenés par-dessus les lignes collectrices (2, 3) et placés en contact électrique avec celles-ci, et les fils de résistance des groupes de fils (5) sont ensuite séparés électriquement d'au moins une des lignes collectrices (2, 3) par sectionnement (10) réalisé à proximité de ladite ligne collectrice (2, 3).

5. Vitrage en verre feuilleté chauffable électriquement selon la revendication 2 ou 3, **caractérisé en ce que** les fils de résistance (16) des groupes de fils (5) séparés des lignes d'alimentation en courant de chauffage sont amenés par dessus les lignes collectrices fournissant le courant (2, 3), mais sont séparés électriquement de celles-ci par des sections de pellicules isolantes intercalées (17, 18).

6. Vitrage en verre feuilleté chauffable électriquement selon la revendication 5, **caractérisé en ce que** les fils de résistance (16) des groupes de fils (5) séparés des lignes d'alimentation en courant de chauffage sont mis en contact, entre les sections de pellicules isolantes (17, 18), avec une section d'une feuille de métal (20), qui est équipée d'une barrette de connexion ressortant latéralement du verre feuilleté de telle sorte que ces groupes de fils (5) puissent remplir une fonction électrique indépendante des fils de chauffage.

7. Vitrage en verre feuilleté chauffable électriquement selon l'une des revendications 5 et 6, **caractérisé en ce que** les groupes de fils (5) séparés des lignes collectrices (2, 3) peuvent être connectés à volonté comme conducteurs de chauffage supplémentaire à la source de courant.

8. Vitrage en verre feuilleté chauffable électriquement selon la revendication 6, **caractérisé en ce que** les groupes de fils séparés de la ligne d'alimentation en courant de chauffage (5, 51, 52) peuvent servir de champ d'antenne.

9. Vitrage en verre feuilleté chauffable électriquement selon la revendication 8, **caractérisé en ce que** les groupes de fils (5) séparés de la ligne d'alimentation en courant de chauffage sont interconnectés et représentent le champ d'antenne pour le domaine AM, tandis que la tension HF obtenue de la zone de fils de chauffage représente la tension d'antenne pour le domaine FM.

10. Vitrage en verre feuilleté chauffable électriquement selon l'une ou l'autre des revendications 8 et 9, **caractérisé en ce que** divers groupes de fils (5, 51) des fils de résistance séparés du courant de chauffage sont équipés indépendamment les uns des autres de lignes de connexion propres (28, 29) et, le cas échéant, forment conjointement avec la tension d'antenne obtenue de la zone de fils de chauffage, via la ligne de connexion (30), les divers canaux d'antenne d'une antenne de réaction en diversité.

11. Vitrage en verre feuilleté chauffable électriquement selon l'une ou l'autre des revendications 8 et 9, **caractérisé en ce qu**'un champ de fils d'antenne de grande surface constitué de plusieurs groupes de fils (52) forme l'antenne pour le domaine FM et qu'un petit champ de fils d'antenne de faible capacité constitué d'un groupe de fils (5) forme l'antenne pour le domaine AM.

## Claims

1. Electrically heatable glazing pane made of laminated glass, containing resistance wires with a diameter of between 0.005 and 0.1 mm and spaced apart from each other by 2 to 8 mm, the said wires being inserted in the intermediate thermoplastic layer essentially parallel to each other and extending between two collecting lines (2; 3) arranged in the intermediate thermoplastic layer, characterised in that the heated surface of the laminated-glass glazing pane (1) is overall equipped uniformly with the resistance wires, several resistance wires adjacent to each other are collected together respectively in a group of wires (4) and are connected to the current supply lines (collecting lines 2, 3) and, between these groups of wires (4) connected to the current supply lines, groups of wires (5) consisting of several resistance wires adjacent to each other are respectively separated from at least one heating current supply line.

2. Electrically heatable glazing pane made of laminated glass according to Claim 1, characterised in that the groups of wires (4, 5) consist of resistance wires inserted in a straight line in the intermediate thermoplastic layer.

3. Electrically heatable glazing pane made of laminated glass according to Claim 1, characterised in that the groups of wires (4', 5') consist of resistance wires inserted in a sinusoid in the intermediate thermoplastic layer.

4. Method of producing an electrically heatable glazing plane made of laminated glass according to Claim 2 or 3, characterised in that the resistance wires of all the groups of wires (4, 5) are led over the collecting lines (2, 3) and placed in electrical contact with them, and the resistance wires in the groups of wires (5) are then electrically separated from at least one of the collecting lines (2, 3) by cutting (10) effected close to the said collecting line (2, 3).

5. Electrically heatable glazing plane made of laminated glass according to Claim 2 or 3, characterised in that the resistance wires (16) in the groups of wires (5) separated by heating current supply lines are led over the collecting lines supplying the current (2, 3), but are separated electrically by these by sections of intermediate insulating films (17, 18).

6. Electrically heatable glazing pane made of laminated glass according to Claim 5, characterised in that the resistance wires (16) in the groups of wires (5) separated from the heating current supply lines are put in contact, between the sections of insulating films (17, 18), with a section of a metal sheet (20), which is equipped with a connecting bar laterally emerging from the laminated glass so that these groups of wires (5) can fulfil an electrical function independent of the heating wires.

7. Electrically heatable glazing pane made of laminated glass according to one of Claims 5 and 6, characterised in that the groups of wires (5) separated from the collecting lines (2, 3) can be connected as required as additional heating conductors to the current source.

8. Electrically heatable glazing pane made of laminated glass according to Claim 6, characterised in that the groups of wires separated from the heating current supply line (5, 51, 52) can serve as an antenna field.

9. Electrically heatable glazing pane made of laminated glass according to Claim 8, characterised in that the groups of wires (5) separated from the heating current supply line are interconnected and represent the antenna field for the AM range, whilst the HF voltage obtained from the heating wire zone represents the antenna voltage for the FM range.

10. Electrically heatable glazing pane made of laminated glass according to one or other of Claims 8 and 9, characterised in that various groups of wires (5, 51) of the resistance wires separated from the heating current are equipped independently of each other with their own connecting lines (28, 29) and, where applicable, form conjointly with the antenna voltage obtained from the heating wire zone, via the connecting line (30), the various antenna channels of a diversity feedback antenna.

11. Electrically heatable glazing pane made of laminated glass according to one or other of Claims 8 and 9, characterised in that an antenna wire field with a large surface area consisting of several groups of wires (52) forms the antenna for the FM range and in that a small antenna wire field of low capacity consisting of a group of wires (5) forms the antenna for the AM range.

## Patentansprüche

1. Elektrisch beheizbare Verbundglasscheibe mit Widerstandsdrähten mit einem Durchmesser von 0,005 bis 0,1 mm, die in gegenseitigen Abständen von 2 bis 10 mm angeordnet und in die thermoplastische Zwischenschicht im wesentlichen parallel zueinander eingelegt sind und sich zwischen zwei in der thermoplastischen Zwischenschicht angeordneten Sammelleitern (2, 3) erstrecken, **dadurch gekennzeichnet**, daß die beheizbare Fläche der Verbundglasscheibe (1) insgesamt gleichmäßig mit den Widerstandsdrähten belegt ist, von denen jeweils mehrere einander benachbarte Widerstandsdrähte jeweils als Drahtgruppe (4) zusammengefaßt und mit Stromzuführungsleitern (Sammelleiter 2, 3) verbunden sind, und daß zwischen diesen mit beiden Sammelleitern (2, 3) verbundenen Drahtgruppen (4) jeweils aus mehreren einander benachbarten Widerstandsdrähten gebildete Drahtgruppen (5) wenigstens von einem Stromzuführungsleiter elektrisch getrennt sind.

2. Elektrisch beheizbare Verbundglasscheibe nach Anspruch 1, **dadurch gekennzeichnet**, daß die Drahtgruppen (4, 5) aus geradlinig in die thermoplastische Zwischenschicht eingelegten Widerstandsdrähten bestehen.

3. Elektrisch beheizbare Verbundglasscheibe nach Anspruch 1, **dadurch gekennzeichnet**, daß die Drahtgruppen (4', 5') aus wellenförmig in die thermoplastische Zwischenschicht eingelegten Widerstandsdrähten bestehen.

4. Verfahren zum Herstellen einer elektrisch beheizbaren Verbundglasscheibe nach Anspruch 2 oder 3, **dadurch gekennzeichnet**, daß die Widerstandsdrähte aller Drahtgruppen (4, 5) über die Sammelleiter (2, 3) verlegt und in elektrischen Kontakt mit ihnen gebracht werden, und daß danach die Widerstandsdrähte der Drahtgruppen (5) elektrisch von wenigstens einem der Sammelleiter (2, 3) durch Abschneiden in der Nähe des besagten Sammelleiters (2, 3) getrennt werden.

5. Elektrisch beheizbare Verbundglasscheibe nach Anspruch 2 oder 3, **dadurch gekennzeichnet**, daß die Widerstandsdrähte (16) der von den Heizstrom-Zuführungsleitern getrennten Drahtgruppen (5) über die stromzuführenden Sammelleiter (2, 3) geführt, jedoch von diesen elektrisch durch zwischengelegte Abschnitte von Isolierfolien (17, 18) getrennt werden.

6. Elektrisch beheizbare Verbundglasscheibe nach Anspruch 5, **dadurch gekennzeichnet**, daß die Widerstandsdrähte (16) der von den Heizstrom-Zuführungsleitern getrennten Drahtgruppen (5) zwischen den Abschnitten der Isolierfolien (17, 18) mit einem Abschnitt einer Metallfolie (20) in Kontakt gebracht sind, die mit einer Anschlußfahne versehen ist, welche seitlich aus der Verbundglasscheibe so herausgeführt ist, daß diese Drahtgruppen eine von den Heizdrähten unabhängige elektrische Funktion erfüllen können.

7. Elektrisch beheizbare Verbundglasscheibe nach einem der Ansprüche 5 oder 6, **dadurch gekennzeichnet**, daß die von den Sammelleitern (2, 3) getrennten Drahtgruppen (5) bei Bedarf als Zusatzheizleiter mit der Stromquelle verbindbar sind.

8. Elektrisch beheizbare Verbundglasscheibe nach Anspruch 6, **dadurch gekennzeichnet**, daß die von dem Heizstrom-Zuführungsleiter (5, 51, 52) getrennten Drahtgruppen als Antennenfeld dienen können.

9. Elektrisch beheizbare Verbundglasscheibe nach Anspruch 8, **dadurch gekennzeichnet**, daß die von dem Heizstrom-Zuführungsleiter getrennten Drahtgruppen (5) miteinander verbunden sind und das Antennenfeld für den AM-Bereich bilden, während die HF-Spannung aus dem Gebiet der Heizdrähte die Antennenspannung für den FM-Bereich darstellt.

10. Elektrisch beheizbare Verbundglasscheibe nach einem der Ansprüche 8 oder 9, **dadurch gekennzeichnet**, daß verschiedene vom Heizstrom getrennten Drahtgruppen (5, 51) unabhängig voneinander mit eigenen Verbindungsleitungen (28, 29) ausgestattet sind und gegebenenfalls zusammen mit der Antennenspannung aus dem Heizleiterfeld über die Verbindungslinie (30) die verschiedenen Antennenkanäle einer Diversity-Antenne bilden.

11. Elektrisch beheizbare Verbundglasscheibe nach einem der Ansprüche 8 oder 9, **dadurch gekennzeichnet**, daß ein aus mehreren Drahtgruppen (52) gebildetes großflächiges Antennenfeld die Antenne für den FM-Bereich bildet und ein aus einer Drahtgruppe (5) gebildetes kleines Antennenfeld mit geringer Kapazität die Antenne für den AM-Bereich bildet.
